# EUROPÄISCHE PATENTSCHRIFT

(11) **EP 1 725 691 B1**
(45) Veröffentlichungstag und Bekanntmachung des Hinweises auf die Patenterteilung: **30.06.2010**
(21) Anmeldenummer: 05736835.9
(22) Anmeldetag: 16.03.2005
(51) Int. Cl.: C22C 9/04, F16J 1/16

(54) **KOLBENBOLZENBUCHSE**
PISTON PIN BUSHING
COUSSINET D'AXE DE PISTON

(30) Priorität: 19.03.2004 DE 102004013548
(43) Veröffentlichungstag der Anmeldung: 29.11.2006
(73) Patentinhaber: KS Gleitlager GmbH, 68789 St. Leon-Rot (DE)
(72) Erfinder: DEICKE, Klaus, 74257 Untereisesheim (DE); SCHUBERT, Werner, 69168 Wiesloch (DE); BUSCHENHENKE, Theo, 26871 Ostrhauderfehn (DE); RATHJE, Reimond, 26871 Papenburg (DE); LANGNER, Heinbert, 33378 Rheda-Wiedenbrück (DE)
(74) Vertreter: Friz, Oliver
(86) Internationale Anmeldenummer: PCT/EP2005/002794
(87) Internationale Veröffentlichungsnummer: WO 2005/090621

(56) Entgegenhaltungen:
- WO-A-00/00761
- WO-A-2004/025145
- DE-A1- 4 035 264
- US-A- 1 051 992

## Beschreibung

Die vorliegende Erfindung betrifft eine Kolbenbolzenbuchse aus einer Kupfer-Zink-Legierung.

Kolbenbolzenbuchsen wurden seither u. a. aus Kupfer-Zink-Knetlegierungen, insbesondere CuZn31Si, hergestellt. Dabei wird zunächst die Knetlegierung im Strangguss zu einem rohrförmigen Abschnitt stranggegossen. Dieser rohrförmige Abschnitt wird dann geknetet, also durch eine Ziehmatrize hindurchgezogen, wo eine grobe Außen- und Innenform vorgegeben wird und im Übrigen das Gefüge durch den Knetvorgang beeinflusst wird. Danach wird gegebenenfalls eine Wärmebehandlung (Rekristallisationsglühung) durchgeführt. Von dem so erhaltenen Abschnitt werden Buchsen abgestochen, die dann an ihrer Außenseite einer spanabhebenden Bearbeitung unterworfen werden. Die so erhaltenen Buchsen werden in einen Kolben eingepresst. Die Öffnung wird danach ausgespindelt, also spanabhebend gedreht, um in der vorgegebenen Orientierung der Buchse zum Kolben eine genaue Gestaltung und Anordnung der Öffnung relativ zum Kolben (eine sogenannte Formbohrung) auszubilden.

DE 4035264 offenbart Kupferlegierungen und insbesondere Messinglegierungen, die auf verschiedenen Gebieten nützlich sind, bei keiner Abnutzungsbeständigkeit erforderlich ist.

Hiervon ausgehend liegt der vorliegenden Erfindung die Aufgabe zugrunde, die Herstellung einer Kolbenbuchse wirtschaftlicher zu gestalten.

Diese Aufgabe wird erfindungsgemäß durch eine Kolbenbolzenbuchse mit den Merkmalen des Anspruchs 1 gelöst.

Es wird also bewusst auf eine knetende Bearbeitung des Kolbenbolzenbuchsenwerkstoffs nach dem Stranggießen verzichtet, was sich nachfolgend anhand des Gefüges der Kolbenbolzenbuchse feststellen lässt.

Kolbenbolzenbuchsen unterliegen einer sehr starken Beanspruchung hinsichtlich der Temperatur und der Druck- bzw. Stoßbelastung infolge des Zünddrucks. Man war lange Zeit davon ausgegangen, dass für die Erreichung einer solchen starken Beanspruchbarkeit die Ausführung einer knetenden Bearbeitung zwingend erforderlich sei, wodurch das Gussgefüge in ein Knetgefüge umgewandelt wird. Mit der Erfindung wurde nunmehr festgestellt, dass unter Verwendung der anspruchsgemäßen Legierung auf eine solche knetende Bearbeitung verzichtet werden kann und dennoch hervorragende Ergebnisse erzielt werden, die denjenigen herkömmlicher CuZn31Si-Knetlegierungen überlegen sind.

Bevorzugte Ausführungsformen der erfindungsgemäßen Kolbenbolzenbuchse ergeben sich aus den Unteransprüchen.

Des Weiteren wird Schutz beansprucht für ein Verfahren zum Herstellen einer Kolbenbolzenbuchse mit den Merkmalen des Anspruchs 5. Die so erhaltene Kolbenbolzenbuchse ist ohne weitere spanende Bearbeitung in die Kolbenbolzenöffnung des Kolbens einpressbar. Im eingepressten Zustand wird dann eine Formbohrung angebracht.

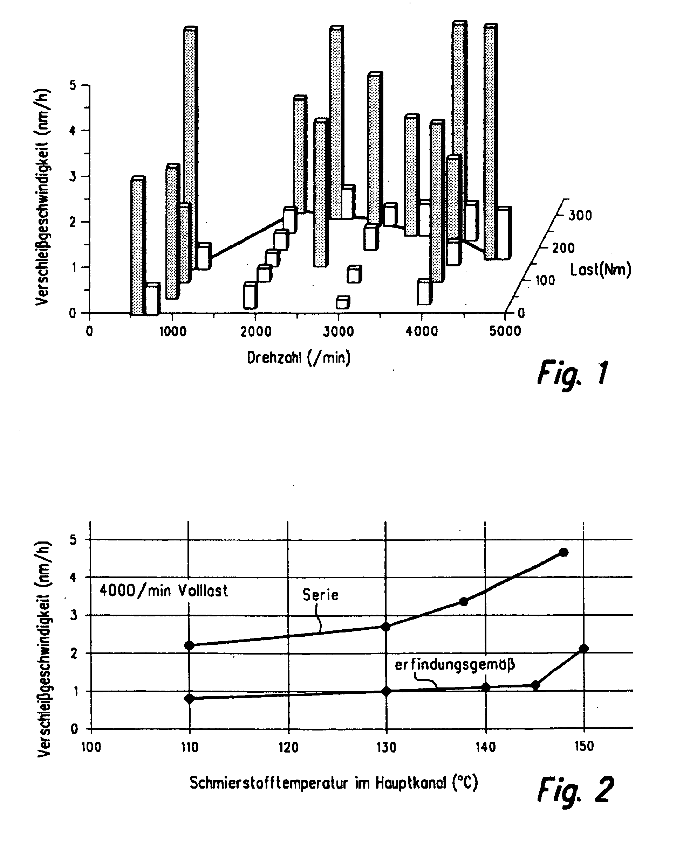

Die Figuren 1 und 2 zeigen die Ergebnisse von Vergleichsmessungen der Verschleißgeschwindigkeit.

Es wurden Vergleichsmessungen durchgeführt, wobei bei einem Motor, mit einer Nennleistung von 96 kW bei 4000 U/min eine Serienkolbenbolzenbuchse aus CuZn31Si-Knetlegierung und eine erfindungsgemäße Kolbenbolzenbuchse aus CuZn30Al2NiMnFe-Legierung miteinander verglichen wurden. Es wurde die Verschleißgeschwindigkeit in nm/h ermittelt, und zwar wurde die thermisch höher belastete Kolbenbolzenbuchse des Kolbens (gegenüber dem Kühlkanaleinlass) gemittelt über eine Fläche von 12 mm x 22 mm im Hauptlastbereich (dem Boden zugewandter Scheitelbereich) im Hinblick auf Verschleiß untersucht. Die Ergebnisse der Messungen sind im Diagramm nach Figur 1 angegeben. Man erkennt die Verschleißgeschwindigkeit in Abhängigkeit von der Drehzahl und der Last.

Figur 2 zeigt das Ergebnis der ermittelten Verschleißgeschwindigkeit der beiden Buchsen bei Volllast (4000 Umdrehungen/min) in Abhängigkeit von der Schmierstofftemperatur im Hauptkanal des Motors.

Man erkennt, dass die erfindungsgemäße Kolbenbolzenbuchse, obschon sie keiner knetenden Bearbeitung im Zuge ihrer Herstellung unterworfen wurde, der Serienbuchse aus CuZn31Si-Knetlegierung bei weitem überlegen ist.

## Patentansprüche

1. Kolbenbolzenbuchse aus einer Messinglegierung mit 30 - 32,2 Gew.-% Zink, 1,8 - 2,2 Gew.-% Aluminium, 1,8 - 2,2 Gew.-% Mangan, 1,4 - 2,2 Gew.-% Nickel und 1,4 - 2,0 Gew.-% Eisen, sowie gegebenenfalls verunreinigungsbedingten Bestandteilen jeweils höchstens 0,2 Gew.-% in der Summe aber höchstens 1 Gew.-% und mit Rest Kupfer, die als Längsabschnitt von einem stranggegossenen Rohr, das zuvor an seiner Außenseite spanend bearbeitet wurde, abgelängt wurde und ohne einer knetenden Bearbeitung unterzogen zu werden freifallend verwendbar ist.

2. Kolbenbolzenbuchse nach Anspruch 1, **dadurch gekennzeichnet, dass** die Messinglegierung 1,8 - 2,2 Gew.-% Nickel aufweist.

3. Kolbenbolzenbuchse nach Anspruch 1 oder 2, **dadurch gekennzeichnet, dass** die Messinglegierung 1,6 - 2,2 Gew.-% Eisen aufweist.

4. Kolbenbolzenbuchse nach Anspruch 1, 2 oder 3, **dadurch gekennzeichnet, dass** sie einen Außendurchmesser von 20 - 50 mm aufweist.

5. Kolbenbolzenbuchse nach Anspruch 1, 2, 3 oder 4, **dadurch gekennzeichnet, dass** sie eine Wandstärke von 1 - 4 mm aufweist.

6. Verfahren zum Herstellen einer Kolbenbolzenbuchse aus einer Messinglegierung mit 30 - 32,2 Gew.-% Zink, 1,8 - 2,2 Gew.-% Aluminium, 1,8 - 2,2 Gew.-% Mangan, 1,4 - 2,2 Gew.-% Nickel und 1,4 - 2,0 Gew.-% Eisen, sowie gegebenenfalls verunreinigungsbedingten Bestandteilen jeweils höchstens 0,2 Gew.-% in der Summe aber höchstens 1 Gew.-% und mit Rest Kupfer, wobei die Messinglegierung zur Bildung eines rohrförmigen Körpers stranggegossen wird und der erhaltene rohrförmige Körper außen spanend bearbeitet wird, und wobei danach ein Längsabschnitt von dem rohrförmigen Körper abgelängt wird, der ohne einer knetenden Bearbeitung unterzogen zu werden als Kolbenbolzenbuchse verwendbar ist.

## Claims

1. Piston pin bearing bush in a brass alloy with 30 - 32.2 percent in weight zinc, 1.8 - 2.2 percent in weight aluminium, 1.8 - 2.2 percent in weight manganese, 1.4 - 2.2 percent in weight nickel and 1.4 - 2.0 percent in weight iron, together with, as the case may be, constituents due to impurities, each no more than 0.2 percent in weight, but with a maximum of 1 percent in weight in total, and with copper as the remainder, which was cut as a longitudinal section from a continuously cast pipe, previously machined on its outside by metal cutting, and which can be used as required without being subjected to any forging treatment.

2. Piston pin bearing bush according to Claim 1, **characterised in that** the brass alloy contains 1.8 - 2.2 percent in weight of nickel.

3. Piston pin bearing bush according to Claim 1 or 2, **characterised in that** the brass alloy contains 1.6 - 2.2 percent in weight of iron.

4. Piston pin bearing bush according to Claim 1, 2 or 3, **characterised in that** its outer diameter is between 20 and 50mm.

5. Piston pin bearing bush according to Claim 1, 2, 3 or 4, **characterised in that** its wall thickness is between 1 and 4mm.

6. Method of manufacturing piston pin bearing bush from a brass alloy with 30 - 32.2 percent in weight zinc, 1.8 - 2.2 percent in weight aluminium, 1.8 - 2.2 percent in weight manganese, 1.4 - 2.2 percent in weight nickel and 1.4 - 2.0 percent in weight iron, together with, as the case may be, constituents due to impurities, each no more than 0.2 percent in weight, but with a maximum of 1 percent in weight in total, and with copper as the remainder, in which the brass alloy is continuously cast to create a tubular object, and the tubular object obtained is machined on the outside by metal cutting, and in which a longitudinal section is subsequently cut from the tubular object, which can be used as a piston pin bearing bush without being subjected to any forging treatment.

## Revendications

1. Coussinet d'axe de piston en alliage de laiton contenant 30 à 32,2 % en poids de zinc, 1,8 à 2,2 % en poids d'aluminium, 1,8 à 2,2 % en poids de manganèse, 1,4 à 2,2 % en poids de nickel et 1,4 à 2,0 % en poids de fer, ainsi qu'éventuellement des composants liés à des impuretés, dont les pourcentages pondéraux respectifs sont inférieurs ou égaux à 0,2 % et dont le pourcentage pondéral cumulé est inférieur ou égal à 1 %, et, pour le reste, du cuivre, lequel coussinet d'axe de piston est découpé sous la forme d'un tronçon longitudinal à partir d'un tube obtenu en coulée continue, préalablement usiné par enlèvement de copeaux sur sa face extérieure, tombe par gravité et est utilisable sans être soumis à un corroyage.

2. Coussinet d'axe de piston selon la revendication 1, **caractérisé en ce que** l'alliage de laiton contient 1,8 à 2,2 % en poids de nickel.

3. Coussinet d'axe de piston selon la revendication 1 ou la revendication 2, **caractérisé en ce que** l'alliage de laiton contient 1,6 à 2,2 % en poids de fer.

4. Coussinet d'axe de piston selon la revendication 1, 2 ou 3 **caractérisé en ce qu'**il présente un diamètre extérieur compris entre 20 et 50 mm.

5. Coussinet d'axe de piston selon la revendication 1, 2, 3 ou 4, **caractérisé en ce qu'**il présente une épaisseur de paroi comprise entre 1 et 4 mm.

6. Procédé de fabrication d'un coussinet d'axe de piston dans un alliage de laiton contenant 30 à 32,2 % en poids de zinc, 1,8 à 2,2 % en poids d'aluminium, 1,8 à 2,2 % en poids de manganèse, 1,4 à 2,2 % en poids de nickel et 1,4 à 2,0 % en poids de fer, ainsi qu'éventuellement des composants liés à des impuretés, dont les pourcentages pondéraux respectifs sont inférieurs ou égaux à 0,2 % et dont le pourcentage pondéral cumulé est inférieur ou égal à 1 %, et, pour le reste, du cuivre, l'alliage de laiton étant coulé en continu pour former un corps tubulaire, le corps tubulaire obtenu étant usiné extérieurement par enlèvement de copeaux, puis découpé en tronçons longitudinaux de tube, lesquels peuvent être utilisés comme coussinets d'axe de piston sans être soumis à un corroyage.
